Europäisches Patentamt

European Patent Office

Office européen des brevets

(19)

(11) **EP 1 258 330 A1**

(12) ## EUROPEAN PATENT APPLICATION

(43) Date de publication:
**20.11.2002   Bulletin 2002/47**

(51) Int Cl.⁷: **B27K 3/15**

(21) Numéro de dépôt: **01111417.0**

(22) Date de dépôt: **10.05.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(71) Demandeur: **UNIVERSITE CATHOLIQUE DE LOUVAIN**
**1348 Louvain-la-Neuve (BE)**

(72) Inventeur: **Tilquin, Bernard**
**1435 Mont-Saint-Guilbert (BE)**

(74) Mandataire: **Bird, Ariane et al**
**Bird Goen & Co,**
**Klein Dalenstraat 42A**
**3020 Winksele (BE)**

(54) **Procédé de traitement d'un matériau poreux**

(57)   Procédé de traitement d'un matériau poreux à base de cellulose et/ou de lignine comprenant l'imprégnation dudit matériau poreux par au moins un monomère comprenant au moins un groupement vinylique polymérisable par irradiation, puis irradiation du matériau imprégné par une radiation ionisante à haute énergie.

Le monomère d'imprégnation comprend un monomère de greffage possédant au moins une fonction capable de réagir avec les groupements hydroxyles de la cellulose et/ou de la lignine et/ou au moins un monomère de réticulation, et l'imprégnation est effectuée dans des conditions propres à limiter l'épaisseur de la couche d'imprégnation à une épaisseur de 0,1 à 5 mm sous la surface du matériau poreux.

Application à l'obtention d'un matériau dont le facteur d'imperméabilité à l'humidité ne dépasse pas 55.

**EP 1 258 330 A1**

**Description**

La présente invention concerne un procédé de traitement d'un matériau poreux à base de cellulose et/ou de lignine ainsi qu'un tel matériau présentant un facteur réduit d'imperméabilité à l'humidité. Plus particulièrement, la présente invention concerne un procédé d'imprégnation d'un matériau naturel tel que du bois permettant de réduire considérablement et durablement l'imperméabilité à l'humidité du matériau ainsi traité par rapport aux procédés de traitement déjà connus.

ETAT DE LA TECHNIQUE

Parmi les procédés de traitement de matériaux poreux à base de cellulose et/ou de lignine, on connaît déjà le "bois plastique" (brevets U.S. 3.077.417 à 3.077.420) obtenu par dégazage de bois sous vide, imprégnation du bois sous pression par le méthacrylate de méthyle jusqu'à saturation, mise sous azote du bois imprégné puis irradiation par une source de cobalt-60 ou césium-137 à une dose inférieure à 4 Mrads afin de polymériser le méthacrylate de méthyle. Ce procédé est lent, conduit à un produit lourd et dont la rétention d'eau (30% environ en poids) est trop élevée. Par ailleurs certaines substances contenues dans le bois, par exemple la quercétine, peuvent inhiber la polymérisation. Enfin l'imprégnation par le méthacrylate de méthyle ne permet pas d'obtenir une véritable stabilité dimensionnelle du matériau traité. Alternativement, l'emploi de faisceau d'électrons à une dose de 10 à 15 Mrads n'aboutit qu'à un durcissement très partiel (30 à 50%) du monomère. Le brevet GB 845.690 décrit une amélioration cinétique à ce procédé, consistant à mélanger le substrat cellulosique à un agent de gonflement hydrosoluble non polymérisable avant irradiation, puis à éliminer cet agent de gonflement après irradiation. Le but poursuivi est d'augmenter l'efficacité du greffage, défini par le fait que le polymère formé est lié chimiquement à la cellulose, et se trouve dans les interstices comme à la surface de la cellulose. Les exemples X et XI de ce brevet GB 845.690 décrivent l'irradiation, par passage dans un accélérateur Van de Graaff sous un faisceau d'électrons ayant une énergie de 2 Mev (soit une dose de 1,5 Mrad), d'un film de cellulose régénérée placé dans une cellule remplie de méthacrylate de glycidyle.

Un autre procédé dit "plastique collé" consiste à revêtir le bois d'une couche primaire, puis d'une couche secondaire (à base de solvants) pour boucher les trous et enfin d'une couche de finition à base de monomères acryliques polymérisables par le rayonnement ultraviolet. L'inconvénient principal du procédé réside dans le délaminage rapide du revêtement, obligeant à une répétition fréquente du traitement. La polymérisation se faisant seulement en surface, il ne peut y avoir greffage sur les composants du bois. Une alternative à ce type de procédé consiste à revêtir le bois d'un polyuréthane qui forme un film plastique non greffé au bois et, pour cette raison, aisément pelliculable et présentant donc l'inconvénient de devoir être fréquemment re-appliqué au bois pour conserver la protection contre l'humidité.

Dans de nombreuses régions du monde, diverses essences de bois restent très appréciées et employées pour la construction de bâtiments ou de parties de bâtiments exposés à l'humidité de l'atmosphère ambiante, aux précipitations et/ou aux variations climatiques de toute nature, notamment aux effets du rayonnement solaire. Une protection durable contre ces facteurs naturels de dégradation du bois de construction constitue donc un enjeu économique de première grandeur. En particulier, le coût de l'entretien et/ou de la rénovation du bois naturel est principalement constitué de coûts de main d'oeuvre, et il est donc important que l'entretien puisse être espacé dans le temps, à efficacité comparable. Il existe aussi un besoin pour que la résistance du bois naturel à l'humidité puisse être améliorée sans augmenter significativement le poids du matériau par unité de volume, c'est-à-dire sans alourdir les structures de bâtiments utilisant le bois. Il est également désirable que le bois ainsi traité soit en outre protégé contre des facteurs biologiques de dégradation tels que diverses sortes d'insectes et de champignons. D'autres besoins devant être simultanément rencontrés dans ce domaine de la technique sont d'une part l'absence d'aspect huileux ou collant au toucher du bois après traitement et d'autre part l'absence de modification durable des propriétés mécaniques et de la stabilité dimensionnelle du bois après traitement.

RESUME DE L'INVENTION

La présente invention est basée sur la constatation inattendue qu'un matériau poreux à base de cellulose et/ou de lignine tel que le bois peut être traité de manière à la fois améliorée et durable contre l'humidité et d'autres facteurs naturels ou biologiques de dégradation par imprégnation dudit matériau poreux par au moins un monomère vinylique polymérisable par irradiation, puis irradiation du matériau poreux ainsi imprégné par une radiation ionisante à haute énergie, à la double condition que :

- le monomère polymérisable d'imprégnation comprenne un monomère de greffage possédant au moins une fonction capable de réagir avec les groupements hydroxyles de la cellulose et/ou de la lignine et/ou au moins un monomère de réticulation, et

- l'imprégnation soit effectuée dans des conditions propres à limiter l'épaisseur de la couche d'imprégnation à une valeur négligeable par rapport à l'épaisseur de la pièce de matériau à traiter, par exemple une épaisseur de 0,1 à 5 mm environ sous la surface du matériau poreux.

De la sorte, il est possible d'obtenir un matériau poreux à base de cellulose et/ou de lignine comprenant, sur une épaisseur d'environ 0,1 à 5 mm sous sa surface, un film imperméable à l'humidité d'un polymère greffé audit matériau poreux et/ou réticulé tel que le facteur d'imperméabilité à l'humidité du matériau ne dépasse pas 55 environ, ce facteur étant défini comme le produit du taux pondéral (exprimé en pourcentage) de reprise d'humidité du matériau après avoir été plongé dans l'eau à 20°C pendant 48 heures par le taux pondéral (exprimé en pourcentage), relativement au matériau poreux, du ou des monomères constituant le polymère dudit film imperméable à l'humidité. Une valeur de 55 pour ce facteur signifie en clair que, à titre d'exemple, un taux de reprise d'humidité du bois de 11% en poids (mesuré dans les conditions précitées) est obtenu par l'imprégnation d'au plus 5% en poids de monomère par rapport au bois traité. Ainsi, le procédé selon l'invention assure une reprise contrôlée d'humidité du matériau poreux traité en utilisant une quantité minimale de monomère d'imprégnation superficielle et, de préférence, en ne nécessitant pas de recours à des solvants organiques non polymérisables nuisibles à l'environnement.

## DESCRIPTION DETAILLEE DE L'INVENTION

Selon un premier aspect, la présente invention concerne un procédé de traitement d'un matériau poreux à base de cellulose et/ou de lignine comprenant l'imprégnation dudit matériau poreux par au moins un monomère comprenant au moins un groupement vinylique polymérisable par irradiation, puis irradiation du matériau imprégné par une radiation ionisante à haute énergie, caractérisé en ce que :

- le monomère d'imprégnation comprend un monomère de greffage possédant au moins une fonction capable de réagir avec les groupements hydroxyles de la cellulose et/ou de la lignine et/ou un monomère de réticulation, et
- l'imprégnation est effectuée dans des conditions propres à limiter l'épaisseur de la couche d'imprégnation à une épaisseur de 0,1 à 5 mm environ sous la surface du matériau poreux.

Selon l'invention, on emploie un système d'imprégnation comprenant un ou plusieurs monomères de greffage et/ou un ou plusieurs monomères de réticulation, pourvu que leur imprégnation dans le matériau poreux soit contrôlée et limitée à une épaisseur, typiquement 0,1 à 5 mm environ, négligeable vis-à-vis de celle du matériau à traiter et située immédiatement sous la surface de celui-ci en contact avec l'atmosphère extérieure. Tout monomère vinylique polymérisable par irradiation et possédant au moins une fonction capable de réagir avec les groupements hydroxyles de la cellulose et/ou de la lignine, c'est-à-dire capable de se greffer par liaisons covalentes avec le matériau poreux, est susceptible d'être utilisé dans le procédé selon l'invention. Une fonction particulièrement efficace à cet égard est la fonction époxy. Par ailleurs, une fonction vinylique dont la vitesse de polymérisation par irradiation est particulièrement avantageuse est la fonction acrylique. En conséquence, un monomère de greffage particulièrement avantageux est un monomère possédant à la fois une fonction acrylique et une fonction époxy, tel qu'un époxy-acrylate. Dans ce monomère, il est préféré que les fonctions acrylique et époxy soient suffisamment espacées l'une de l'autre, comme par exemple dans un acrylate d'époxyalkyle dont le groupement alkyle possède de 4 à 20 atomes de carbone. Il est également préféré que la fonction époxy soit située en extrémité de chaîne de la molécule, pour une meilleure réactivité avec les groupements hydroxyles de la cellulose et/ou de la lignine. Des exemples de monomères époxydés utilisables comprennent donc les acrylates d'époxybutyle, d'époxyhexyle, d'époxyoctyle, d'époxynonyle, d'époxydécyle, d'époxydodécyle, d'époxyoctadécyle, etc. D'autres monomères de greffage utilisables peuvent être dérivés d'un époxy-acrylate par ouverture d'une fonction époxy et formation consécutive d'une fonction hydroxy. D'autres monomères de greffage utilisables peuvent comporter plusieurs fonctions acrylique et plusieurs fonctions époxy ou dérivées d'époxy.

Les monomères de réticulation aptes à la mise en oeuvre du procédé selon l'invention sont bien connus de l'homme de l'art. Une fonction vinylique dont la vitesse de polymérisation par irradiation est particulièrement avantageuse étant une fonction acrylique ou similaire, un monomère de réticulation particulièrement avantageux pour la présente invention est un dérivé polyfonctionnel d'acide $\alpha,\beta$-éthyléniquement insaturé tel que l'acide acrylique, l'acide méthacrylique, l'acide crotonique, l'acide itaconique, l'acide maléique, l'acide fumarique, etc. De manière préférée, ce dérivé polyfonctionnel est un di-, tri- ou tétra-acrylate de polyol. Comme exemples non limitatifs de tels composés, on peut citer le diacrylate d'hexanediol, le diacrylate ou le diméthacrylate d'éthylèneglycol, le diacrylate ou le diméthacrylate de diéthylèneglycol, le diacrylate ou le diméthacrylate de triéthylèneglycol, le diacrylate ou le diméthacrylate de tetraéthylèneglycol, le diacrylate ou le diméthacrylate de polyéthylèneglycol, le triacrylate ou le triméthacrylate de triméthylolpropane, le triacrylate ou le triméthacrylate de pentaerythritol, le tetraacrylate ou le tetraméthacrylate de pentaerythritol, le diacrylate ou le diméthacrylate de bisphénol A ou de bisphénol A éthoxylé.

Le monomère de greffage ou de réticulation peut être le cas échéant mélangé à un autre monomère n'ayant pas de capacité de greffage ou de réticulation, tel qu'un monoacrylate non ou peu réactif avec la fonction hydroxyle, pour autant que le mélange de ces monomères soit en proportions telles que la viscosité à 25°C du mélange soit de préférence comprise entre 10 et 3000 mPa.s environ.

Plusieurs, en fait principalement quatre, paramètres de procédé permettent de définir des conditions d'imprégnation propres à limiter l'épaisseur de la couche d'imprégnation à une épaisseur, typiquement 0,1 à 5 mm environ, négligeable vis-à-vis de celle du matériau à traiter et située immédiatement sous la surface de celui-ci en contact avec l'atmosphère extérieure. Ces paramètres incluent :

- une température d'imprégnation comprise entre 10°C et 80°C environ,
- une durée d'imprégnation ne dépassant pas 90 minutes environ,
- un taux d'humidité du matériau poreux à traiter ne dépassant pas 12% environ,
- une viscosité à 25°C du système d'imprégnation comprenant le monomère de greffage et/ou le monomère de réticulation comprise entre 10 et 3000 mPa.s environ.

A partir de ces indications générales, l'homme de métier est en mesure de déterminer par une expérimentation simple d'une part les monomères ou mélanges de monomères répondant à la condition de viscosité et d'autre part, en fonction du système d'imprégnation retenu et de sa viscosité, la combinaison adaptée des conditions (température et durée) d'imprégnation. Par exemple, la température d'imprégnation sera choisie d'autant plus élevée que la durée sera plus courte et/ou que la viscosité à 25°C sera plus élevée. Quant à la condition d'humidité du matériau poreux, elle signifie que l'efficacité du procédé selon l'invention ne peut être pleinement garantie lorsque le taux d'humidité du matériau à traiter dépasse 12% environ et, en conséquence, qu'il est souhaitable de soumettre celui-ci à une étape préalable de séchage pour abaisser son taux d'humidité jusqu'à cette valeur avant de commencer le traitement selon l'invention. La quantité de monomère de greffage et/ou de monomère de réticulation employé pour l'imprégnation dépend largement des quatre conditions de procédé précitées. Pour une protection satisfaisante et durable du matériau poreux contre l'humidité, il est habituellement suffisant que cette quantité soit comprise entre 1 et 9% environ, de préférence entre 2 et 6% environ, du poids de la partie du matériau poreux concerné par l'imprégnation. L'homme de l'art sera donc toujours à même, en fonctions des conditions économiques qui lui seront imposées, telles que le coût du monomère de greffage et/ou du monomère de réticulation, de choisir les conditions de procédé adaptées la réalisation du but visé.

Le procédé de traitement selon l'invention est applicable à tout matériau poreux à base de cellulose et/ou de lignine, tel que notamment un bois naturel ou reconstitué, appartenant à des espèces diverses de feuillus ou de conifères comme par exemple le pin sylvestre (*pinus sylvestris*), le peuplier (*populus sp*), le bouleau (*betula sp*), l'épicéa (*picea abies*), le hêtre (*fagus sylvatica*), le douglas (*pseudotsuga douglasii*). Comme on le conçoit aisément, s'agissant de matériaux naturels, la quantité de monomère de greffage et/ou de monomère de réticulation employé pour l'imprégnation peut varier d'une espèce à l'autre, tout en restant comprise dans la gamme indiquée précédemment. La forme de la pièce de matériau poreux à traiter ne constitue pas un paramètre critique de la présente invention et peut être de nature quelconque, à la seule condition qu'elle permette une imprégnation et une irradiation suffisamment uniformes. Concernant des pièces destinées à la construction de bâtiments, il pourra s'agir de planches, poutres, blocs et similaires. Afin que le procédé de traitement selon l'invention puisse constituer en une imprégnation superficielle de la pièce de matériau poreux, il est évidemment souhaitable que chaque dimension de ladite pièce soit au moins égale à 10 mm environ.

Le procédé de traitement selon l'invention peut utiliser toute radiation ionisante à haute énergie capable de polymériser le monomère vinylique d'imprégnation, telle que le rayonnement gamma et le faisceau d'électrons ou d'ions lourds. Pour que la cinétique de polymérisation soit toutefois suffis amment rapide et que par conséquent le procédé soit suffisamment efficace, il est toutefois souhaitable que l'énergie d'irradiation employée soit au moins égale à environ 20 KGy. Dans des conditions industrielles, l'énergie d'irradiation peut couramment atteindre 100 KGy environ ou davantage.

Il peut être avantageux, notamment afin de diminuer le taux pondéral (exprimé en pourcentage) de reprise d'humidité du matériau, de répéter au moins une fois le traitement selon l'invention sur le matériau déjà imprégné et irradié une première fois. Les conditions d'impégnation et d'irradiation au cours de ce traitement ultérieur pourront être identiques ou différentes des conditions retenues au cours du premier traitement, tout en restant de préférence à l'intérieur des gammes de paramètres indiquées précédemment. Comme on le comprend aisément cette imprégnation ultérieure a pour effet d'augmenter le taux pondéral (exprimé en pourcentage) de(s) monomère(s) relativement au matériau poreux, même si la quantité de monomère(s) imprégné(s) au cours du traitement ultérieur est généralement très inférieure (de l'ordre du dixième à la moitié) à celle mise en jeu au cours du premier traitement. Pour cette raison, tout en diminuant le taux pondéral (exprimé en pourcentage) de reprise d'humidité du matériau, le traitement ultérieur n'a pas nécessairement pour conséquence de diminuer le facteur d'imperméabilité (FIH) du matériau traité.

Selon un second aspect, la présente invention concerne un matériau poreux à base de cellulose et/ou de lignine comprenant, sur une épaisseur de 0,1 à 5 mm environ sous sa surface, un film imperméable à l'humidité d'un polymère greffé audit matériau poreux et/ou réticulé tel que le facteur d'imperméabilité à l'humidité (ci-après FIH, par abréviation) du matériau ne dépasse pas 55 environ, ledit facteur étant défini comme le produit du taux pondéral (exprimé en pourcentage) de reprise d'humidité du matériau après avoir été plongé dans l'eau à 20°C pendant 48 heures par le taux pondéral (exprimé en pourcentage), relativement au matériau poreux (la partie du matériau poreux comprenant le film imperméable), du ou des monomères constituant le polymère dudit film imperméable à l'humidité. Le procédé de traitement de matériau poreux selon l'invention permet d'atteindre couramment des facteurs FIH très bas, c'est-à-dire (comme on le démontre ci-après dans certains exemples de réalisation de l'invention) des facteurs FIH de l'ordre de 25 environ pour un bois de l'espèce *Pinus sylvestris* et de l'ordre de 28 environ pour un bois de l'espèce *Populus sp.* A facteur FIH constant, il est évidemment souhaitable que le taux pondéral de reprisé d'humidité du matériau, après avoir été plongé dans l'eau à 20°C pendant 48 heures, soit le plus faible possible, sans pour autant nécessiter des quantités de monomère(s) qui rendraient le procédé économiquement inintéressant. En pratique, il s'avère possible que le taux pondéral de reprise d'humidité du matériau, après avoir été plongé dans l'eau à 20°C pendant 48 heures, ne dépasse pas 14% environ lorsque le matériau poreux est un bois de l'espèce *Pinus sylvestris*, et 18% environ lorsque le matériau poreux est un bois de l'espèce *Populus sp.* Comme on le démontre ci-après dans certains exemples de réalisation de l'invention, le taux pondéral de reprise d'humidité, après avoir été plongé dans l'eau à 20°C pendant 48 heures, d'un bois de l'espèce *Pinus sylvestris* peut couramment atteindre environ 10% après une simple imprégnation et environ 9% après une double imprégnation. De même le taux pondéral de reprise d'humidité, après avoir été plongé dans l'eau à 20°C pendant 48 heures, d'un bois de l'espèce *Populus sp* peut couramment atteindre environ 11% après une simple imprégnation et environ 8% après une double imprégnation.

Le procédé de traitement et le matériau poreux traité selon l'invention offrent de nombreux avantages :

-   la résistance du matériau (par ex. du bois naturel) à l'humidité est considérablement améliorée sans augmenter significativement le poids du matériau par unité de volume, c'est-à-dire sans alourdir les structures (par ex. bâtiments) utilisant ce matériau.
-   le matériau est en outre protégé contre des facteurs biologiques de dégradation tels que diverses sortes d'insectes et de champignons.
-   le matériau n'a pas, après traitement, d'aspect huileux ou collant au toucher déplaisant pour la manipulation par les utilisateurs.
-   on ne note pas de modification durable des propriétés mécaniques et/ou de la stabilité dimensionnelle du matériau après traitement.
-   on ne note pas de phénomène de depelliculage comme dans le cas d'un même matériau traité par un polyuréthane.

Les exemples suivants sont donnés à titre purement illustratif de la présente invention et ne prétendent nullement limiter la portée de celle-ci.

EXEMPLES 1 à 33 - imprégnation de *Pinus sylvestris*

On utilise comme échantillons des planches de pin sylvestre *(Pinus sylvestris)* de dimensions 70 x 40 x 20 mm. Après séchage à l'air libre, les échantillons sont placés dans une chambre climatisée maintenue à la température de 20°C et à un taux d'humidité relative de 50% jusqu'à stabilisation de leur poids. Après deux semaines dans ces conditions de préparation, le taux d'humidité d'équilibre du bois est de 10% environ. De manière à conduire l'expérience dans des conditions les plus proches possibles des conditions habituelles de mise en oeuvre et de façonnage de bois dans une structure, et à éviter que l'entrée du produit d'imprégnation par la face transversale de l'échantillon interfère, cette face transversale a été préalablement imperméabilisée de manière connue par application de plusieurs couches d'un vernis de polyuréthane. Le poids de l'échantillon ainsi préparé est noté.

Afin de suivre visuellement la distribution du monomère d'imprégnation (ou, le cas échéant, du mélange de monomères) au sein du bois, quelques milligrammes d'un colorant bleu "astra" ont été solubilisés dans chaque monomère. Directement à la sortie de la chambre climatisée, l'échantillon est imprégné pendant soixante minutes, à l'abri du rayonnement ultraviolet, par le monomère (ou le mélange de monomères soigneusement homogénéisé) choisi maintenu à la température de 22°C. On obtient ainsi, selon la viscosité du monomère à la température choisie, une imprégnation superficielle sur une épaisseur de l'ordre de 0,4 à 2 mm. Par une nouvelle mesure du poids de l'échantillon, le taux pondéral (exprimé en pourcentage) de monomère(s) imprégné(s) par rapport au bois est déterminé et noté $t_1$ dans le tableau 1 ci-après. Ensuite, la polymérisation du monomère (ou du mélange de monomères) est effectuée par exposition au rayonnement gamma (cobalt 60) de manière à recevoir une dose de 50 KGy. L'augmentation de température de l'échantillon pendant l'irradiation n'excède pas 5°C.

Après irradiation, l'échantillon est soumis à un test consistant à le plonger dans l'eau à 20°C pendant 48 heures puis à mesurer à nouveau son poids, de manière à calculer le taux pondéral (exprimé en pourcentage) de reprise d'humidité du bois. Ce taux est noté $t_2$ dans le tableau 1 ci-après. Enfin le facteur d'imperméabilité à l'humidité est calculé par la formule :

$$F.I.H = t_1 \times t_2$$

et reporté dans le tableau 1 ci-après.

Le monomère employé à l'exemple 1 est un monoacrylate époxydé. Aux exemples 2 à 5 sont employés des mélanges comprenant 2/3 (en poids) d'un monoacrylate commercialisé sous la dénomination Ebecryl 111 et 1/3 (en poids) d'un acrylate polyfonctionnel défini ci-après. Aux exemples 6 à 9 sont employés des mélanges comprenant 1/3 (en poids) du monomère Ebecryl 111 et 2/3 (en poids) d'un acrylate polyfonctionnel défini ci-après. Aux exemples 10 à 13 sont employés des mélanges comprenant 2/3 (en poids) d'un monoacrylate commercialisé sous la dénomination Ebecryl 112 et 1/3 (en poids) d'un acrylate polyfonctionnel défini ci-après. Aux exemples 14 à 17 sont employés des mélanges comprenant 1/3 (en poids) du monomère Ebecryl 112 et 2/3 (en poids) d'un acrylate polyfonctionnel défini ci-après. Aux exemples 18 à 25 sont employés des mélanges comprenant 2/3 (en poids) du monomère de l'exemple 1 et 1/3 (en poids) d'un acrylate défini ci-après. Aux exemples 26 à 33 sont employés des mélanges comprenant 1/3 (en poids) du monomère de l'exemple 1 et 2/3 (en poids) d'un acrylate défini ci-après.

L'acrylate polyfonctionnel utilisé aux exemples 2, 6, 10, 14, 19 et 27 est un acrylate tetrafonctionnel commercialisé sous la dénomination Ebecryl 80.

L'acrylate polyfonctionnel utilisé aux exemples 4, 8, 12, 16, 23 et 31 est un acrylate tetrafonctionnel commercialisé sous la dénomination Ebecryl 40.

L'acrylate utilisé aux exemples 3, 7, 11, 15, 22 et 30 est un triacrylate de triméthylolpropane éthoxylé commercialisé sous la dénomination Ebecryl 160.

L'acrylate polyfonctionnel utilisé aux exemples 5, 9, 13, 17, 24 et 32 est le triacrylate de triméthylolpropane.

L'acrylate utilisé aux exemples 20 et 28 est le monomère Ebecryl 111. L' acrylate utilisé aux exemples 21 et 29 est le monomère Ebecryl 112.

L'acrylate polyfonctionnel utilisé aux exemples 18 et 26 est le diacrylate de tripropyleneglycol. L' acrylate polyfonctionnel utilisé aux exemples 25 et 33 est le diacrylate de dipropyleneglycol.

Tous les monomères de dénomination Ebecryl sont commercialement disponibles auprès de la société UCB (Drogenbos, Belgique).

Tableau 1

| Exemple | $t_1$ | $t_2$ | F.I.H |
|---------|-------|-------|-------|
| 1 | 2,5 | 11,9 | 29,9 |
| 2 | 2,3 | 12,4 | 28,5 |
| 3 | 2,1 | 12,8 | 26,8 |
| 4 | 1,8 | 12,3 | 22,6 |
| 5 | 3,8 | 11,9 | 45,2 |
| 6 | 2,7 | 11,6 | 31,1 |
| 7 | 2,3 | 11,3 | 26,2 |
| 8 | 4,0 | 11,3 | 45,2 |
| 9 | 2,6 | 11,2 | 29,0 |
| 10 | 2,1 | 11,2 | 23,1 |
| 11 | 2,5 | 11,5 | 29,1 |
| 12 | 3,3 | 11,3 | 37,9 |
| 13 | 3,1 | 12,0 | 37,0 |
| 14 | 3,0 | 10,4 | 31,4 |
| 15 | 2,6 | 11,5 | 29,8 |
| 16 | 2,7 | 11,5 | 31,3 |

Tableau 1   (suite)

| Exemple | $t_1$ | $t_2$ | F.I.H |
|---------|-------|-------|-------|
| 17 | 2,9 | 12,6 | 36,8 |
| 18 | 3,5 | 12,8 | 44,8 |
| 19 | 3,3 | 12,2 | 40,3 |
| 20 | 2,4 | 10,7 | 25,7 |
| 21 | 2,7 | 11,5 | 31,0 |
| 22 | 3,2 | 12,4 | 39,7 |
| 23 | 2,7 | 10,7 | 28,9 |
| 24 | 2,9 | 13,0 | 37,7 |
| 25 | 3,7 | 13,3 | 49,2 |
| 26 | 3,6 | 13,2 | 47,5 |
| 27 | 2,9 | 10,7 | 31,0 |
| 28 | 3,1 | 12,5 | 38,8 |
| 29 | 2,4 | 12,9 | 31,0 |
| 30 | 2,7 | 12,7 | 34,3 |
| 31 | 3,1 | 10,3 | 31,9 |
| 32 | 3,1 | 12,0 | 37,2 |
| 33 | 3,5 | 14,0 | 49,0 |

EXEMPLES 34 à 63 - imprégnation de *Populus sp*

Des échantillons de peuplier (*Populus sp)* sont préparés, imprégnés puis irradiés selon la méthode décrite aux exemples 1 à 33. Les taux pondéraux $t_1$ et $t_2$ ainsi que le facteur FIH sont reportés dans le tableau 2 ci-après.

Le monomère employé à l'exemple 34 est le monoacrylate époxydé de l'exemple 1. Le monomère employé à l'exemple 35 est une résine acrylée trifonctionnelle à base d'un dérivé de glycérol, commercialisée par la société UCB (Drogenbos, Belgique) sous la dénomination OTA 480. Les monomères employés aux exemples 36 à 39 sont des acrylates polyfonctionnels définis ci-après. Aux exemples 40 à 43 sont employés des mélanges comprenant 2/3 (en poids) d'un monoacrylate commercialisé sous la dénomination Ebecryl 111 et 1/3 (en poids) d'un acrylate polyfonctionnel défini ci-après. Aux exemples 44 à 46 sont employés des mélanges comprenant 1/3 (en poids) du monomère Ebecryl 111 et 2/3 (en poids) d'un acrylate polyfonctionnel défini ci-après. Aux exemples 47 et 48 sont employés des mélanges comprenant 2/3 (en poids) d'un monoacrylate commercialisé sous la dénomination Ebecryl 112 et 1/3 (en poids) d'un acrylate polyfonctionnel défini ci-après. Aux exemples 48 à 51 sont employés des mélanges comprenant 1/3 (en poids) du monomère Ebecryl 112 et 2/3 (en poids) d'un acrylate polyfonctionnel défini ci-après. Aux exemples 52 à 57 sont employés des mélanges comprenant 2/3 (en poids) du monomère de l'exemple 1 et 1/3 (en poids) d'un acrylate défini ci-après. Aux exemples 58 à 63 sont employés des mélanges comprenant 1/3 (en poids) du monomère de l'exemple 1 et 2/3 (en poids) d'un acrylate défini ci-après.

L'acrylate polyfonctionnel utilisé aux exemples 40, 44, 47, 49, 53 et 59 est un acrylate tetrafonctionnel commercialisé sous la dénomination Ebecryl 80.

L'acrylate polyfonctionnel utilisé aux exemples 42, 46, 51 et 62 est un acrylate tetrafonctionnel commercialisé sous la dénomination Ebecryl 40.

L'acrylate utilisé aux exemples 41, 45, 48, 50, 55 et 61 est un triacrylate de triméthylolpropane éthoxylé commercialisé sous la dénomination Ebecryl 160.

L'acrylate polyfonctionnel utilisé aux exemples 43 et 56 est le triacrylate de triméthylolpropane. L'acrylate polyfonctionnel utilisé aux exemples 52 et 58 est le diacrylate de tripropyleneglycol. L'acrylate polyfonctionnel utilisé aux exemples 57 et 63 est le diacrylate de dipropyleneglycol.

L'acrylate utilisé à l'exemple 54 et est le monomère Ebecryl 111. L'acrylate utilisé à l'exemple 60 est le monomère Ebecryl 112.

Tableau 2

| Exemple | $t_1$ | $t_2$ | F.I.H |
|---|---|---|---|
| 34 | 3,0 | 18,0 | 54,0 |
| 35 | 4,5 | 11,6 | 52,2 |
| 36 | 5,0 | 10,4 | 52,0 |
| 37 | 4,1 | 9,5 | 39,0 |
| 38 | 4,8 | 10,8 | 51,8 |
| 39 | 4,3 | 12,8 | 55,0 |
| 40 | 2,5 | 14,9 | 37,2 |
| 41 | 2,2 | 13,6 | 29,9 |
| 42 | 2,0 | 12,9 | 25,8 |
| 43 | 3,6 | 14,7 | 52,9 |
| 44 | 2,1 | 11,7 | 24,6 |
| 45 | 4,0 | 13,6 | 54,4 |
| 46 | 3,0 | 12,9 | 38,7 |
| 47 | 2,8 | 11,2 | 31,4 |
| 48 | 3,6 | 12,0 | 43,2 |
| 49 | 3,9 | 10,7 | 41,7 |
| 50 | 3,2 | 11,7 | 37,4 |
| 51 | 3,7 | 11,7 | 43,3 |
| 52 | 2,8 | 15,0 | 42,0 |
| 53 | 3,2 | 14,6 | 25,7 |
| 54 | 2,3 | 17,3 | 31,0 |
| 55 | 3,2 | 12,1 | 39,7 |
| 56 | 2,7 | 12,0 | 28,9 |
| 57 | 3,3 | 15,1 | 37,7 |
| 58 | 3,0 | 15,6 | 46,8 |
| 59 | 3,9 | 13,6 | 53,0 |
| 60 | 2,0 | 14,1 | 28,2 |
| 61 | 2,7 | 11,4 | 30,8 |
| 62 | 3,0 | 11,7 | 35,1 |
| 63 | 3,7 | 13,3 | 49,2 |

EXEMPLES 64 à 71 - double imprégnation de *Pinus sylvestris*

Des échantillons de pin sylvestre sont préparés, imprégnés puis irradiés une première fois selon la méthode décrite aux exemples précédents. Après la première irradiation, ils sont à nouveau imprégnés par un monomère ou mélange de monomères puis irradiés dans les mêmes conditions que celles utilisées pour le premier traitement et déjà décrites. Pour la première imprégnation, on a utilisé un monomère ou mélange de monomères déjà utilisé dans l'un des exemples 1 à 33 et noté comme tel dans le tableau 3 ci-après. Pour la seconde imprégnation, on a utilisé un monomère ou mélange de monomères déjà utilisé dans l'un des exemples 1 à 63 et noté comme tel dans le tableau 3 ci-après. Les taux pondéraux $t_1$ (se rapportant à la somme des monomères imprégnés pendant la première et la seconde imprégnations) et $t_2$ ainsi que le facteur FIH sont reportés dans le tableau 3 ci-après.

Tableau 3

| Exemple | 1ere imprég | 2e imprégn. | $t_1$ | $t_2$ | FIH |
|---|---|---|---|---|---|
| 64 | Ex. 1 | Ex. 1 | 4,0 | 10,8 | 43,2 |
| 65 | Ex. 1 | Ex. 36 | 3,7 | 9,6 | 35,5 |
| 66 | Ex. 1 | Ex. 38 | 3,9 | 9,8 | 38,2 |
| 67 | Ex. 32 | Ex. 32 | 3,8 | 9,2 | 35,0 |
| 68 | Ex. 24 | Ex. 24 | 3,9 | 10,4 | 40,6 |
| 69 | Ex. 27 | Ex. 27 | 4,9 | 9,0 | 44,1 |
| 70 | Ex. 19 | Ex. 19 | 3,7 | 10,1 | 37,4 |
| 71 | Ex. 27 | Ex. 1 | 5,0 | 9,7 | 48,5 |

EXEMPLES 72 à 79 - double imprégnation de *Populus sp*

Des échantillons de peuplier sont préparés, imprégnés puis irradiés à deux reprises dans les conditions des exemples 64 à 71. Les monomères utilisés pour la première et la seconde imprégnation, ainsi que les taux pondéraux $t_1$ (se rapportant à la somme des monomères imprégnés) et $t_2$ ainsi que le facteur FIH sont reportés dans le tableau 4 ci-après.

Tableau 4

| Exemple | 1ere imprég | 2e imprégn. | $t_1$ | $t_2$ | FIH |
|---|---|---|---|---|---|
| 72 | Ex. 1 | Ex. 36 | 3,3 | 9,3 | 30,7 |
| 73 | Ex. 1 | Ex. 38 | 2,7 | 11,6 | 31,3 |
| 74 | Ex. 32 | Ex. 32 | 3,5 | 8,7 | 30,5 |
| 75 | Ex. 24 | Ex. 24 | 2,7 | 10,2 | 27,5 |
| 76 | Ex. 27 | Ex. 27 | 4,5 | 8,1 | 36,8 |
| 77 | Ex. 19 | Ex. 19 | 4,2 | 10,3 | 43,3 |
| 78 | Ex. 27 | Ex. 1 | 4,4 | 10,3 | 45,3 |
| 79 | Ex. 19 | Ex. 1 | 4,3 | 11,4 | 49,0 |

## Revendications

1. Procédé de traitement d'un matériau poreux à base de cellulose et/ou de lignine comprenant l'imprégnation dudit matériau poreux par au moins un monomère comprenant au moins un groupement vinylique polymérisable par irradiation, puis irradiation du matériau imprégné par une radiation ionisante à haute énergie, **caractérisé en ce que** :

   - le monomère d'imprégnation comprend un monomère de greffage possédant au moins une fonction capable de réagir avec les groupements hydroxyles de la cellulose et/ou de la lignine et/ou au moins un monomère de réticulation, et
   - l'imprégnation est effectuée dans des conditions propres à limiter l'épaisseur de la couche d'imprégnation à une épaisseur de 0,1 à 5 mm sous la surface du matériau poreux.

2. Procédé de traitement d'un matériau poreux selon la revendication 1, **caractérisé en ce que** ladite fonction du monomère de greffage est une fonction époxy.

3. Procédé de traitement d'un matériau poreux selon l'une des revendications 1 et 2, **caractérisé en ce que** le groupement vinylique polymérisable par irradiation est un groupement acrylique.

**4.** Procédé de traitement d'un matériau poreux selon l'une des revendications 1 à 3, **caractérisé en ce que** le monomère de greffage est un époxyacrylate.

**5.** Procédé de traitement d'un matériau poreux selon l'une des revendications 1 à 4, **caractérisé en ce que** le monomère de greffage est un acrylate d'époxyalkyle dont le groupement alkyle possède de 4 à 20 atomes de carbone.

**6.** Procédé de traitement d'un matériau poreux selon l'une des revendications 1 à 5, **caractérisé en ce que** la quantité de monomère de greffage et/ou de monomère de réticulation employé pour l'imprégnation est comprise entre 1 et 9%, de préférence entre 2 et 6%, du poids de la partie du matériau poreux concerné par l'imprégnation.

**7.** Procédé de traitement d'un matériau poreux selon l'une des revendications 1 à 6, **caractérisé en ce que** les conditions d'imprégnation propres à limiter l'épaisseur de la couche d'imprégnation incluent une température comprise entre 10°C et 80°C et/ou une durée ne dépassant pas 90 minutes et/ou un taux d'humidité du matériau poreux ne dépassant pas 12% et/ou une viscosité à 25°C du monomère de greffage et/ou du monomère de réticulation comprise entre 10 et 3000 mPa.s.

**8.** Procédé de traitement d'un matériau poreux selon l'une des revendications 1 à 7, **caractérisé en ce que** le matériau poreux est un bois.

**9.** Procédé de traitement d'un matériau poreux selon l'une des revendications 1 à 8, **caractérisé en ce que** la radiation ionisante à haute énergie est choisie parmi le rayonnement gamma et le faisceau d'électrons ou d'ions lourds.

**10.** Procédé de traitement d'un matériau poreux selon l'une des revendications 1 à 9, **caractérisé en ce que** l'énergie d'irradiation employée est au moins égale à 20 KGy.

**11.** Procédé de traitement d'un matériau poreux selon l'une des revendications 1 à 10, **caractérisé en ce que** le monomère de réticulation est un dérivé polyfonctionnel d'acide $\alpha,\beta$-éthyléniquement insaturé tel qu'un di-, tri- ou tétra-acrylate de polyol.

**12.** Matériau poreux à base de cellulose et/ou de lignine comprenant, sur une épaisseur de 0,1 à 5 mm sous sa surface, un film imperméable à l'humidité d'un polymère greffé audit matériau poreux et/ou réticulé tel que le facteur d'imperméabilité à l'humidité du matériau ne dépasse pas 55, ledit facteur étant défini comme le produit du taux pondéral (exprimé en pourcentage) de reprise d'humidité du matériau après avoir été plongé dans l'eau à 20°C pendant 48 heures par le taux pondéral (exprimé en pourcentage), relativement au matériau poreux, du ou des monomères constituant le polymère dudit film imperméable à l'humidité.

**13.** Matériau poreux selon la revendication 12, **caractérisé en ce que** le taux pondéral de reprise d'humidité du matériau après avoir été plongé dans l'eau à 20°C pendant 48 heures ne dépasse pas 14% lorsque le matériau poreux est un bois de l'espèce *Pinus sylvestris*.

**14.** Matériau poreux selon la revendication 12, **caractérisé en ce que** le taux pondéral de reprise d'humidité du matériau après avoir été plongé dans l'eau à 20°C pendant 48 heures ne dépasse pas 18% lorsque le matériau poreux est un bois de l'espèce *Populus sp.*

**European Patent Office**

**EUROPEAN SEARCH REPORT**

Application Number

EP 01 11 1417

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 057 840 A (NIPPON CATALYTIC CHEM IND) 6 December 2000 (2000-12-06) * page 1, line 47 – page 17, line 25 * | 1-14 | B27K3/15 |
| X | EP 0 990 493 A (ROEHM GMBH) 5 April 2000 (2000-04-05) * page 3, line 31 – page 5, line 23 * | 1-14 | |

TECHNICAL FIELDS SEARCHED (Int.Cl.7)

B27K

The present search report has been drawn up for all claims

| Place of search | Date of completion of the search | Examiner |
|---|---|---|
| MUNICH | 27 February 2002 | De Waha, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 01 11 1417

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2002

| Patent document cited in search report | | Publication date | Patent family member(s) | | Publication date |
|---|---|---|---|---|---|
| EP 1057840 | A | 06-12-2000 | JP | 2000334705 A | 05-12-2000 |
| | | | JP | 2000345074 A | 12-12-2000 |
| | | | JP | 2001098038 A | 10-04-2001 |
| | | | EP | 1057840 A2 | 06-12-2000 |
| | | | NO | 20002632 A | 04-12-2000 |
| | | | US | 6335060 B1 | 01-01-2002 |
| EP 0990493 | A | 05-04-2000 | DE | 19940989 A1 | 16-03-2000 |
| | | | EP | 0990493 A1 | 05-04-2000 |

EPO FORM P0459

For more details about this annex : see Official Journal of the European Patent Office, No. 12/82